Europäisches Patentamt

European Patent Office

Office européen des brevets

(19)

(11) Publication number: 0 409 477 A2

# EUROPEAN PATENT APPLICATION

(21) Application number: 90307593.5

(22) Date of filing: 11.07.90

(51) Int. Cl.⁵: H02H 9/00

(30) Priority: 21.07.89 US 384340

(43) Date of publication of application:
23.01.91 Bulletin 91/04

(84) Designated Contracting States:
DE FR GB IT

(71) Applicant: AMERICAN TELEPHONE AND
TELEGRAPH COMPANY
550 Madison Avenue
New York, NY 10022(US)

(72) Inventor: Kakalec, Robert John
8 John Marshall Lane
Madison, New Jersey 07940(US)
Inventor: Zaltsman, Vladimir
39 Craig Place
Bloomfield, New Jersey 07003(US)

(74) Representative: Buckley, Christopher Simon
Thirsk et al
AT&T (UK) LTD. AT&T Intellectual Property
Division 5 Mornington Roadoadoad
Woodford Green, Essex IG8 OTU(GB)

(54) Inductive inrush current control for off-line battery charger plant.

(57) Magnetic start up inrush current to a ferro-transformer (305) of an off-line rectifier circuit is limited by controlling the phase angle of the input voltage (90 degrees for a single phase input and a standard three phase input) at which the input is connected to the ac source (300).

The input voltage to the off-line rectifier circuit is monitored for zero crossing points (312). In one arrangement the input voltage is directly monitored and a switch triggering pulse is time delayed for a time interval equal to 90 degrees of the input voltage waveform at which point the switch is enabled to connect the input AC voltage to the rectifier. In another arrangement the input voltage is integrated (311) and the zero crossing (312) of the waveform as integrated is used to define a trigger pulse to activate a switch (306) connecting the input voltage to the rectifier.

FIG. 3

EP 0 409 477 A2

# INDUCTIVE INRUSH CURRENT CONTROL FOR OFF-LINE BATTERY CHARGER PLANT

## FIELD OF THE INVENTION

This invention relates to circuits having an inductive input and to the scontrol of inrush current to the circuit input upon initial energization of the circuit. It is particularly concerned with a battery charging rectiiier circuit energized by a current limited source.

## Background of the Invention

Inrush currents are large transient input currents drawn by a circuit at start up and are mainly due to the characteristics of reactive input impedances whose transient impedances differ signnificanlly from their steady state impedances. Such inrush currents are undesirable causing protective devices to activate, distorting signal waveforms and in general over stressing circuit components. Circuits with a capacitive input impedance, for example, typically draw large inrush currents greatly in excess of the steady state input currents because the capacitive input impedance operates as a short circuit at start up due to the very low series impedance of a discharged capacitor. Capacitive input inrush current prevention has been dealt with extensively in the prior art and usually involves inserting an input impedance in the input current path to limit the initial current level. The impedance becomes a source of power dissipation and normally additional circuitry is included to bypass the impedance once steady state operation is achieved.

Start up current applied to inductive circuits may attain large inrush values if the inductive device in the input circuit saturates. Such saturation occurs (assuming an absence of residual flux in the inductive reactance) because the flux path traced during start up is asymmetrical because it initially starts at the origin of the flux-drive (ie B-H) plane. Since this trace rapidly exceeds the knee of the hysteresis curve and enters the saturation region of the component, it is not uncommon for the input current to exceed the normal steady state input current by a factor of twenty. If this current is supplied by a limited capacity AC source such as an UPS, the UPS may be overloaded and shut down or suffer overload damage therefrom. With a limited current source the input voltage waveform of the source may be severely distorted (particularly in terms of the crest factor expressed as a peak to rms ratio) leading to the generation of significantly sized harmonic signals.

Inductive input inrush current prevention has becn generally ignored except in the instance of electric motor inputs in which the motor includes special winding arrangements to limit initial current surges. Static circuits with saturable inductive input impedances appear to have becn generally neglected as far as active scontrol of inrush current is concerned. An impedance in series with the input to limit the input inrush current is not satisfactory because it does nothing to compensate for the initial asymmetry of the hysteresis loop and still permits a reduced current with inrush characteristics that typically has a duration of 25-35 cycles of the input source.

Saturation of the static magnetic devices can he avoided by using oversized magnetic devices in which the knee of the initial flux trace is not attained in response to the input start up current (ie the steady state flux value is at least less than one-half of the core saturation level). Such components are size inefficient with respect to the requirements of steady state operation which permits use of a much smaller device. Since size is important in many applications this solution is not generally attractive.

In some instances an added magnetic component may be added in series with the inductive input to limit input current. This however does not solve the problem of the initial asymmetrical flux traces and in addition the added magnetic component must he switched out of the input path during steady state operation, thereby requiring extra switching circuitry.

## Summary of the Invention

In accord with the principles of the invention magnetic start up inrush current to a transformer of an off-line rectifier circuit is limited by controlling the phase angle of the input voltage (90 degrees for a single phase input and a standard three phase input) at which the input is connected to the ac source.

In particular the input voltage to the off-line rectifier circuit is monitored for zero crossing points. In one arrangement the input voltage is direclly monitored and a switch triggering pulse is time delayed for a time interval equal to 90 degrees at which point the switch is enabled to connect the input AC voltage to the rectifier. In another arrangement the input voltage is integrated and the zero crossing of the waveform as integrated is used to define a trigger pulse to activate the switch connecting the input voltage to the rectifier.

## Brief Description of the Drawing

In the drawing:
Fig. 1 is a graph of a hysteresis trace of an inductive input impedance of a circuit; Fig. 2 is a graph of a typical transient inductive inrush current to an inductive circuit compared with the steady state current of the circuit;
Fig. 3 is a block schematic of an inrush current limiting arrangement for a circuit with an inductive input impedance; and
Fig. 4 is another block schematic of an inrush current limiting arrangement for a circuit with an inductive input impedance.

## Detailed Description

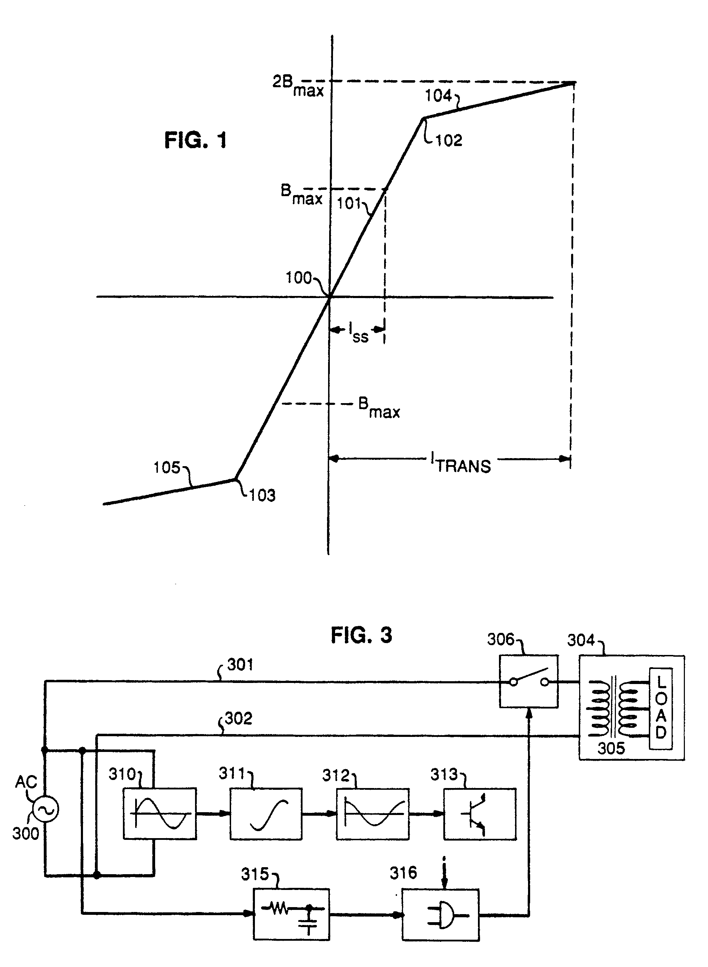

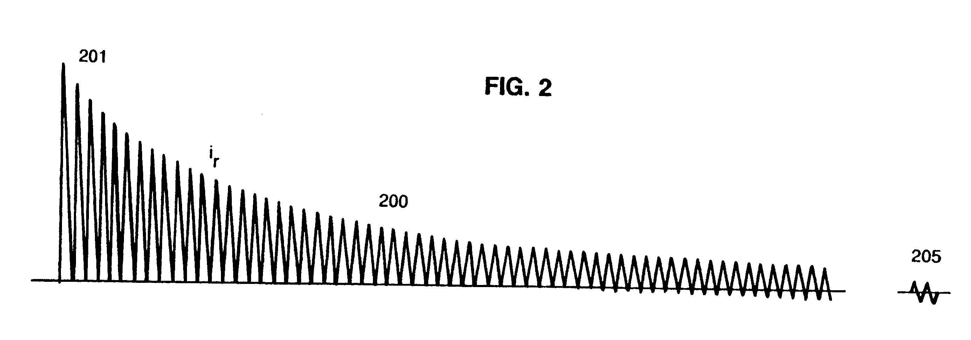

A typical inductive hysteresis trace for a circuit or magnetic component is shown in the graph of Fig. 1. The hysteresis trace 101 is symmetrical about the origin 100 and has a high permeability value between the loci 102 and 103. At this high permeability value (along the trace 101) the applied current drive perceives a substantial reactance and current flow is limited to a first magnitude. When the applied drive exceeds a value where the operating point on the hysteresis trace exceeds either of the loci 102 or 103 the magnetic device saturates and the permeability of the device is significantly reduced as evidenced by the two traces 104 and 105. With this reduced permeability the flux generated with increased drive is significantly less than for the unsaturated condition. Accordingly less reactance is presented to limit current flow.

In a typical circuit arrangement, the operating parameters are such that the flux response to an AC drive swings between +Bmax and -Bmax and is symmetrical about the origin 100. The reactance limits the current flow to a value $^ISS$ shown in the graph of fig. 1. A start up however the initial flux swing may start from the origin 100 (assuming no residual flux) and the start up drive may achieve a flux level of 2Bmax placing the operating loci in the saturated region of the hysteresis characteristic. The reduced reactance permits a much larger transient current value $^Itrans$ shown in the graph of fig. 1.

This transient inrush current 200 is cyclic in nature and typically persists for many cycles of operation. Fig. 2 illustrates such a transient inrush current and compares it with a steady state current. As shown the current in the initial cycle is essentially unipolar and attains a very high peak value 201. With each succeeding cycle the peak value of the current decreases. This decrease is relatively slow and the waveform remains essentially unipolar. As is apparent the peak of the transient inrush current level remains above the peak of the steady state current 205 for a long time interval.

An arrangement for limiting this inrush current is shown in the schematic in fig. 3. A current limited AC source 300 is coupled, via leads, 301 and 302 to a power circuit 304 having an inductive input impedance. This power circuit may be a battery charging circuit however the invention is not limited to battery charging circuits.

Such an AC source 300 may comprise a static inverter circuit in an uninterruptible power supply or some other reserve energy source. The inductive input reactance of circuit 304 may he due to a magnetic component such as a transformer 305. A switch 306, which may comprise a thyristor type device, is included in lead line 301 to connect/disconnect the circuit 304 from the AC source 300.

A voltage monitoring circuit 310 is connected across the output of the current limited AC source to sense the substantially sinusoidal waveform of the applied AC input voltage. This sensed voltage is applied to an integrating circuit 311 which is operative for shifting the waveform 90 degrees in phase from the phase of the input AC voltage. Zero crossings of this shifted waveform are determined in the zero crossing detector 312. A zero crossing marker is used to trigger the firing circuit 313 which generates a drive pulse to trigger the switch 306 into conduction and hence couple the input AC voltage to the circuit 304.

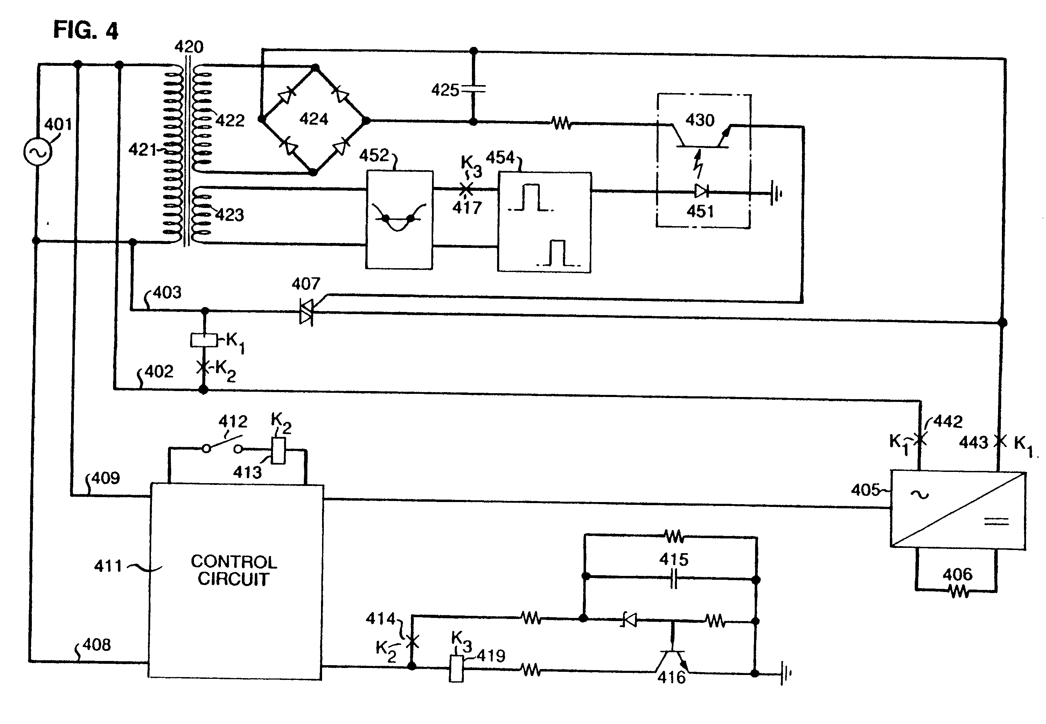

Since it may not he desireable to immediately connect the source to the circuit 304, because of other considerations such as connecting switch contact bounce, the input AC voltage is applied to a delay circuit 315. After the delay has elapsed the subsequent gating circuit 316 is enabled to couple the trigger signal output of the firing circuit 313 to enable the switch 306. Another arrangement for limiting inductive inrush current is disclosed in more detail in fig. 4. An AC source 401 having limited current capacity is shown coupled, via leads 402 and 403 and K1 relay contacts 442 and 443,to a rectifier circuit 405 which in turn is connected to energize a load 406. Included in lead 403 is a triac switch 407 to control connection of the AC source 401 to the rectifier 405.

The AC source 401 is connected, via leads 408 and 409, to energize a control circuit 411 which operates the rectifier circuit 405. A start switch 412 is connected to energize a K2 relay coil 413. Closure of the K2 contact 414 initiates timing of a delay by enabling the charging of capacitor 415. After the timed delay has elapsed transistor 416 is biased into conduction energizing the K3 relay coil 419. Relay K3 contact 417 is then closed permitting operation of the inrush control circuitry at the end of the timed delay, as described below. This time delay is intended to prevent system malfunction due to contact bounce associated with a K1 contactor at the closure of start switch 412.

A primary winding 421 of a transformer 420 is connected to the AC source 401 and its secondary winding 422 is connected to a rectifier 424. A capacitor 425 energized by the output of the rectifier 424 is connected, via photo-transistor 430, to energize the triac switch 407. Conductivity of the photo-transistor 430 is controlled by the light output of a light emitting diode 451 optically coupled to its base junction. A zero crossing detector 452 connected to secondary winding 423 identifies and generates a pulse coincident with zero crossings of the voltage waveform of the AC source 401. Once the K3 relay coil 419 is enabled the pulse output of zero crossing detector 452 is connected to the time delay circuit 454 which delays the pulse for an elapsed time equallying one-quarter cycle of the input voltage waveform. In the case of an applied AC signal at 60 Hertz the time delay applied to the pulse is 4.33 milli-seconds. This time delayed pulse causes the light emitting diode 451 to enable the photo-transistor to apply the voltage of capacitor 425 to bias the triac into conduction thereby connecting the AC soource 401 to the rectifier 405.

## Claims

1. A power processing circuit having an inductive input and adapted to be powered by an AC source of energy that is current limited, including a switch (306) for coupling the AC source of energy to the inductive input, and CHARACTERIZED BY control circuitry (310-316) for enabling the switch to couple the AC source of energy to the inductive input, including a trigger drive circuit (313) coupled for applying trigger signals to the switch to enable it into conduction, and means (310,311,312) for synchronizing operation of the trigger drive circuit with a zero crossing of the input voltage waveform of the AC source at a phase delay of one-quarter cycle of the input voltage waveform.

2. A circuit as claimed in claim 1 wherein the synchronising means includes a circuit (310) for sensing the voltage waveform of the input voltage, an integration circuit (311) for integrating the voltage waveform sensed by the sensing circuit, and a circuit (312) for sensing the zero crossings of the output of the integration circuit.

3. A circuit as claimed in claim 1 wherein the synchronising means includes a circuit (452) for sensing the zero crossings of the voltage waveform of the input voltage, and a signal time delay circuit (454) timed for one-quarter of a cycle of the AC source of energy responsive to the output of the sensing circuit.

4. A circuit as claimed in claim 1,2 or 3 wherein the control circuitry includes means (315,316) for delaying coupling of the trigger drive circuit to enable the switch to allow initial turn-on circuit transients to decay.

5. A circuit as claimed in any preceding claim wherein the trigger drive circuit includes means (424,425) for deriving a voltage from the AC energy source, and a gate (430) for coupling the voltage to the switch (407).

## FIG. 1

## FIG. 3

**FIG. 2**

EP 0 409 477 A2

FIG. 4

EP 0 409 477 A2